# EUROPÄISCHE PATENTANMELDUNG

(11) **EP 2 199 944 A2**
(43) Veröffentlichungstag der Anmeldung: **23.06.2010**
(21) Anmeldenummer: 09015777.7
(22) Anmeldetag: 21.12.2009
(51) Int. Cl.: G06F 21/20

(54) **Verfahren zur Authentifizierung einer Person gegenüber einer elektronischen Datenverarbeitungsanlage mittels eines elektronischen Schlüssels**

(30) Priorität: 19.12.2008 DE 102008063864
(71) Anmelder: Charismathics GmbH, 80331 München (DE)
(72) Erfinder: Schlichte, Marc, 81379 München (DE); Pi, Stephen, 80687 München (DE); Gossel, Sven, 80634 München (DE)
(74) Vertreter: Eder, Christian

(57) **Zusammenfassung**

Die Erfindung betrifft ein Verfahren zur Authentifizierung einer Person gegenüber einer elektronischen Datenverarbeitungsanlage 17 mittels eines elektronischen Schlüssels, wobei als elektronischer Schlüssel ein tragbares Endgerät 1 mit Display 3 und/oder standardisierten Kommunikations-Einrichtung, insbesondere eine WLAN-Einrichtung 13 eines Mobiltelefons, verwendet wird und zur Authentifizierung zwischen der Datenverarbeitungsanlage 17 und dem tragbaren Endgerät 1 eine drahtlose Kommunikation erfolgt.

## Beschreibung

Die Erfindung betrifft ein Verfahren zur Authentifizierung einer Person gegenüber einer elektronischen Datenverarbeitungsanlage mittels eines elektronischen Schlüssels bzw. eines sogenannten (Security-)Tokens.

Derartige Verfahren werden beispielsweise eingesetzt, um Personen bzw. Nutzer gegenüber einem am Arbeitsplatz befindlichen Computer bzw. Zielsystem zu authentifizieren und zu autorisieren. Hierzu sind am Markt Systeme bekannt, die als elektronische Schlüssel Smart-Card Token verwenden.

Deratige Smart-Card Token verfügen über einen Speicher, eine Datenverarbeitungsvorrichtung (CPU) und eine Ein-/Ausgabeeinheit und können an einem Smart-Card-Lesegerät des Zielsystems eingelesen werden, auf dem die Identität des Nutzers bestimmt werden soll.

Wird ein Smart-Card Token in ein entsprechendes am Zielsystem angeschlossenes Smart-Card-Lesegerät eingelegt und vom Zielsystem als berechtigter Schlüssel erkannt, so ist der Nutzer hiermit authentifiziert und autorisiert und kann an dem Zielsystem arbeiten.

Zur Vermeidung von Missbrauch existieren für eine Authentifizierung eine Reihe von symmetrischen oder asymmetrischen Verschlüsselungsverfahren mit Geheimnissen, Passwörtern, private keys, Zertifikaten, etc.. Beispielsweise sendet das Zielsystem eine sog. Challenge-Nachricht an das Token, das daraufhin diese Nachricht mit einem auf dem Token gespeicherten privaten Schlüssel signiert und zurücksendet. Auf dem Ziel-Computersystem wird die Signatur mit Hilfe des anerkannten öffentlichen Schlüssels des Token-Inhabers verifiziert und dieser somit authentifiziert. Das Zielsystem kann daraufhin dem Nutzer den Zugriff auf mit seiner Identität assoziierte Ressourcen gestatten (Autorisierung).

Um die Authentifizierung sicherer zu machen, verlangen die meisten Smart-Card Token die Eingabe einer Persönlichen Identifizierungs-Nummer (PIN) vom Token-Inhaber zur Freischaltung des Signier-Prozesses. Die Eingabe einer derartigen PIN erfolgt hierbei auf dem Zielsystem.

Nachteiligerweise wird bei diesem bekannten Authentifizierungsverfahren jedoch ein physisch mit dem Ziel-Computer verbundenes Lesegerät benötigt. Wird zudem eine Authentifizierung auf unterschiedlichen Zielsystemen gewünscht, ist entweder jedes Zielsystem mit einem eigenen Lesegerät auszustatten oder das Lesegerät vom Benutzer zu dem jeweils gewünschten Zielsystem zu transportieren.

Der vorliegenden Erfindung liegt daher die Aufgabe zugrunde, ein Verfahren zu schaffen, welches auf komfortable, einfache und kostengünstige Weise eine Authentifizierung einer Person bzw. eines Nutzers gegenüber einer elektronischen Datenverarbeitungsanlage mittels eines elektronischen Schlüssels ermöglicht.

Diese Aufgabe wird erfindungsgemäß durch ein Verfahren mit den Merkmalen des Patentanspruchs 1 gelöst.

Indem ein tragbares bzw. mobiles Endgerät, wie beispielsweise ein Mobiltelefon, mit einer standardisierten drahtlosen Kommunikationseinrichtung, beispielsweise WLAN-Einrichtung und/oder und einer graphischen Anzeige-Einheit, insbesondere ein Display und/oder Kamera als elektronischer Schlüssel bzw. Token verwendet wird, ist es nunmehr vorteilhafterweise möglich, sich gegenüber einer elektronischen Datenverarbeitungsanlage, beispielsweise einem Arbeitsplatzrechner, zu authentifizieren, ohne dass eine physische Verbindung (Lesegerät) zwischen Token und Datenverarbeitungsanlage erforderlich ist und hierfür Kosten aufgewendet werden müssen.

Eine WLAN-Einrichtung für eine drahtlose Kommunikation oder ein Display und eine Kamera sind dagegen bei heutigen Computersystemen standardmäßig meist vorhanden, so dass keine unnötigen Kosten entstehen. Selbstverständlich ist es aber auch denkbar, über andere drahtlose Kommunikationsstrecken (insbesondere - vorzugsweise bidirektionale - Funkstrecken, akustische oder optische Verbindungen), wie beispielsweise Bluetooth-Verbindung, Infrarot-Verbindung, etc. eine Verbindung zwischen mobilem Endgerät und Datenverarbeitungsanlage zu ermöglichen.

Durch die fehlende physische unmittelbare Verbindung zwischen mobilem Endgerät und Datenverarbeitungsanlage ist es durch das erfindungsgemäße Verfahren zudem möglich, sich gegenüber mehreren unterschiedlichen Datenverarbeitungsanlagen gleichzeitig zu authentifizieren. Zudem kann, falls zur Erhöhung der Sicherheit gewünscht, eine zusätzliche Eingabe eines Passwortes oder einer persönlichen Identifizierungsnummer (PIN) über eine im mobilen Endgerät optional vorhandene Eingabeeinrichtung, wie beispielsweise Tastatur, Touchscreen, etc. erfolgen, an Stelle einer sonst notwendigen unmittelbaren Eingabe an der Datenverarbeitungsanlage, welche die Sicherheit durch die dazu notwendige Kommunikation zwischen den Geräten jedoch wieder reduziert, bzw. den Aufwand zur Gewährung der Vertraulichkeit dieser Kommunikation erhöht.

In bevorzugter Ausgestaltung werden Daten zur Authentifizierung mittels Funk zwischen dem tragbaren Endgerät und der Datenverarbeitungsanlage und/oder Anzeige auf einem Display des tragbaren Endgerätes und einer Kamera der Datenverarbeitungsanlage und/oder Anzeige auf einem Display der Datenverarbeitungsanlage und einer Kamera des tragbaren Endgerätes übertragen. Hierdurch werden vorteilhafterweise Komponenten sowie standardisierte Kommunikationsstrecken bzw. Übertragungswege zur Authentifizierung benutzt, welche in der Regel bereits zu anderen Zwecken an einem mobilen Endgerät, beispielsweise Mobiltelefon oder Smartphone, und an einem Zielsystem, beispielsweise Arbeitsplatzrechner, vorhanden sind. Auf diese Weise können zusätzliche Kosten vermieden werden und gleichzeitig die Sicherheit und Vertraulichkeit erhöht werden.

Die Authentifizierung kann nach der Erfindung mittels bidirektionaler Kommunikation als "Challenge-Response-Authentifizierung" erfolgen, die vorteilhafterweise bereits hohen Sicherheitsanforderungen genügt.

In vorteilhafter Ausgestaltung der Erfindung läuft auf dem tragbaren Endgerät eine Anwendung (Plugin), welche es erlaubt, in einem Speicher des tragbaren Endgeräts wenigstens einen privaten Datenschlüssel und/oder wenigstens ein Zertifikat zu speichern, um im Falle einer Anforderung (challenge) eine mit dem Datenschlüssel eindeutig in Verbindung stehende (codierte) Information, beispielsweise hiermit signiert, an die Datenverarbeitungsanlage zu übertragen. Eine nicht flüchtige Speicherung kann hierbei auf einem internen Speicher (Arbeitsspeicher, Flashrom, Festplatte, etc.) oder einem Wechselmedium (Festplatte, Speicherkarte, etc.) erfolgen.

In weiterer Ausgestaltung der Erfindung kann die Datenverarbeitungsanlage zur Erhöhung der Sicherheit die zurückgesendete, mit dem privaten Datenschlüssel eindeutig in Verbindung stehende Information in der Datenverarbeitungsanlage verifizieren. Eine solche Verifizierung kann je nach Verschlüsselungsverfahren durch Vergleich der übertragenen Daten mit einem in der Datenverarbeitungsanlage bzw. dem Zielsystem bekannten oder gebildeten Ergebnis oder durch entsprechende Verifizierung der übertragenen Daten anhand von zusätzlich übertragenen Daten (Prüfsummen, etc.) erfolgen.

In vorteilhafter Ausgestaltung der Erfindung wird eine Nachricht, beispielsweise per Email, mit einer Zieladresse der Datenverarbeitungsanlage an eine weitere Datenverarbeitungsanlage (Programm-Server) gesandt, welche zusätzlich Geräteinformationen des mobilen Endgerätes enthalten kann. Von der weiteren Datenverarbeitungsanlage (Programm-Server) wird ein Programm, vorzugsweise aus einer Vielzahl von in einer Datenbank gespeicherten Programmen, ausgewählt, welches mit dem mobilen Endgerät bzw. dessen Kommunikationseigenschaften (Kommunikationsstrecken und Protokolle) kompatibel ist, und an die Datenverarbeitungsanlage, beispielsweise ebenfalls per Email, gesendet. Dieses Programm ermöglicht nach Installation auf dem Zielsystem mit seinem Programmmitteln eine Kommunikation mit dem tragbaren Endgerät. Vorteilhafterweise werden zu dieser Vorbereitung der Authentifizierungskommunikation wiederum nur standardisierte Kommunikationsstrecken und Protokolle verwendet, so dass auch hierbei unnötiger Aufwand vermieden werden kann.

Selbstverständlich ist es aber auch denkbar, dass ein entsprechendes Programm von anderer Stelle auf das Zielsystem übertragen wird. Beispielsweise könnte ein derartiges Programm mit einem tragbaren Endgerät auf einem Datenträger (USB-Stick, Speicherkarte, CD, etc.) mitgeliefert werden oder in einem Endgerät bereist gespeichert vorliegen. Statt einem Einlegen des Datenträger am Zielgerät ist es auch denkbar das Programm drahtlos, beispielsweise per Email, direkt an das Zielsystem zu übertragen.

In weiterer Ausgestaltung der Erfindung können von dem tragbaren Endgerät drahtlos von einer Zertifizierungsbehörde Zertifikate beantragt, empfangen und in einem Speicher des tragbaren Endgerätes wenigstens temporär gespeichert werden.

Da auf einem tragbaren Endgerät bzw. Token in besonderer Ausgestaltung der Erfindung ein Schlüsselpaar generiert wird, das aus einem privaten und einem öffentlichen Schlüssel besteht, ist zur Authentifizierung auf der Datenverarbeitungsanlage bzw. dem Zielsystem die Gültigkeit des öffentlichen Schlüssels nachzuweisen. Dies geschieht über eine Zertifizierung der öffentlichen Schlüssel durch eine elektronische Zertifizierungsbehörde. Im Unterschied zu bekannten Smart-Card Token, die aufgrund einer fehlenden drahtlosen Kommunikationsfähigkeit nicht selbst mit der Zertifizierungsbehörde kommunizieren können und bei denen daher die Beantragung von Zertifikaten dabei von dem Zielsystem zu erfolgen hat, kann in dieser Ausgestaltung der Erfindung vorteilhafterweise eine derartige Beantragung von Zertifikaten vom mobilen Endgerät aus erfolgen und die Datensicherheit weiter erhöht werden.

Weitere vorteilhafte Ausgestaltungen der Erfindung ergeben sich aus den Unteransprüchen.

Die Erfindung wird nachfolgend anhand eines in der Zeichnung dargestellten Ausführungsbeispiels näher erläutert.

In der Zeichnung zeigen:
- Fig. 1: ein schematisches Blockschaltbild eines mobilen Endgeräts;
- Fig. 2: eine schematische Darstellung einer Anordnung mit einem mobilen Endge- rät nach Fig. 1 und einer elektronischen Datenverarbeitungsanlage (Ziel- system);
- Fig. 3: eine schematische Darstellung einer Anordnung nach Fig. 2 mit einer elekt- ronischen Datenverarbeitungsanlage einer Authentifizierungsbehörde und einer weiteren elektronischen Datenverarbeitungsanlage und
- Fig. 4: ein Ablaufdiagram der Kommunikation zwischen mobilem Endgerät und Zielsystem.

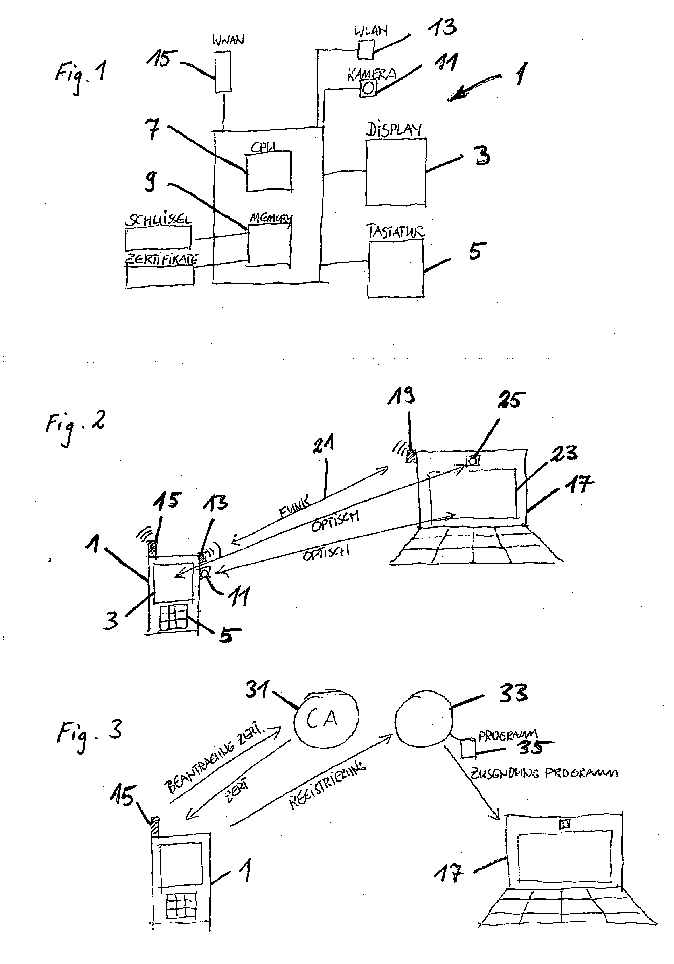

Wie aus Fig. 1 ersichtlich, weist ein mobiles Endgerät nach der Erfindung, im Folgenden Mobiltelefon 1 genannt, ein Display 3, eine Tastatur 5 (elektromechanisch oder auch Touchscreen), einen Datenverarbeitungseinrichtung bzw. Mikroprozessor 7, einen Speicher 9, eine Kamera 11 und eine WLAN-Einrichtung 13 (Wireless Local Area Network-Einrichtung) und eine WWAN-Einrichtung 15 (Wireless Wide Area Network-Einrichtung), vorzugsweise in einem Gehäuse integriert, auf.

Der Speicher 9, also ein interner, fest eingebauter Speicher oder auch Wechselspeichermedium (Speicherkarte, Festplatte, etc.), dient u.a. zur Speicherung von zur Authentifizierung notwendigen Geheimnissen und Daten, wie beispielsweise im Falle einer Challenge-Response-Authentifizierung von Schlüsseln und Zertifikaten.

Ein derartiges Mobiltelefon 1 kann mit einer Datenverarbeitungsanlage bzw. Zielsystem, beispielsweise einem Arbeitsplatzrechner 17, kommunizieren, ohne dass ein spezielles (Karten-)Lesegerät, welches direkt mit dem Zielsystem verbunden ist, erforderlich wäre.

Wie aus Fig. 2 ersichtlich, erfolgt stattdessen eine vorzugsweise bidirektionale Übertragung von Informationen per Funk. Hierbei kann vorteilhafterweise ein standardisiertes drahtloses Funkprotokoll eingesetzt werden (z.B. WLAN, Bluetooth, etc), wobei eine WLAN-Einrichtung 19 an einem modernen Arbeitsplatzrechner 17 in der Regel Standard ist. Anstelle (oder zusätzlich zu) einer Funkstrecke 21 zwischen WLAN-Einrichtung 17 und WLAN-Einrichtung 19 kann die drahtlose Informationsübertragung auch optisch erfolgen, nämlich zwischen der Kamera 11 des Mobiltelefons 1 und einem Display 23 des Arbeitsplatzrechners 17 und/oder zwischen einer Kamera 25 des Arbeitsplatzrechners 17 und dem Display 3 des Mobiltelefons 1.

Hierzu kann eine zu übertragende Information graphisch an dem Display 3, 23 angezeigt und optisch von der Kamera 25, 11 erfasst werden. Die weitere Bildverarbeitung und Bilderkennung der erfassten Information erfolgt dann in bekannter Weise jeweils im Mobiltelefon 1 oder im Arbeitsplatzrechner 17 bzw. gesteuert durch deren Verarbeitungseinheiten (CPUs).

Da das Mobiltelefon 1 nicht mehr physisch mit einem Zielsystem 17 verbunden ist, kann dieses jetzt gleichzeitig zur Authentifizierung gegenüber mehr als einem ZielSystem 17 verwendet werden. Es reicht hierzu aus, dass das Mobiltelefon 1 innerhalb der Funkreichweite der entsprechenden Zielsysteme liegt.

Über eine beispielsweise als Task auf dem Zielsystem 17 laufende Software wird dabei die Präsenz des Mobiltelefons 1 innerhalb der über gewählte Sendeleistung und Empfindlichkeitsstufe definierten Funkumgebung festgestellt, wobei eine mögliche Präsenz in vorbestimmten Intervallen in Abhängigkeit eines Ereignisse (beispielsweise Tastaturbetätigung) abgefragt wird. Es ist aber auch denkbar, die entsprechende Software bzw. Applikation erst bei Auftreten eines bestimmten Ereignisses am Zielsystem 17, wie beispielsweise Tastaturbetätigung, besonderer Programmaufruf eines anderen Programms, Aufruf aus einem Programm heraus, etc. zu starten.

Im Falle einer Challenge-Response-Verschlüsselung kann zur Erhöhung der Sicherheit vor einem Rücksenden einer signierten Response des Mobiltelefons 1 nach Empfang einer vom Zielsystem 17 gesandten Challenge am Mobiltelefon 1 vom Nutzer eine Eingabe eines Passwortes oder einer PIN mittels visueller Aufforderung am Display oder akustischer Aufforderung über Lautsprecher gefordert werden, welche hierzu von dem Nutzer korrekt über Tastatur 5 oder Mikrofon (Spracherkennung) eingegeben werden muss.

Das Vorhandensein einer graphischen Ausgabeeinheit 3 auf dem Mobiltelefon 1 erlaubt im Zusammenhang mit der installierten Kamera 25 am Zielsystem 17 eine optische Übertragung der zur Authentifizierung notwendigen Informationen vom Mobiltelefon 1 zum Zielsystem 17, beispielsweise in Form von am Display 3 angezeigten Barcodes. Verfügt auch das Mobiltelefon 1 über eine Kamera 11, können die Informationen optisch auch vom Bildschirm 23 des Zielsystems 17 zum Mobiltelefon 1, beispielsweise ebenfalls durch am Bildschirm 23 angezeigte Barcodes, übertragen werden.

Durch die in jedem Fall drahtlose Kommunikation (optisch, per Funk oder auch akustisch) ist es mit dem erfindungsgemäßen Verfahren unter Verwendung eines derartigen mobilen Endgerätes 1 auch möglich, sich mit unterschiedlichen mobilen Endgeräten gegenüber einem Zielsystem 17 zu authentifizieren. Beispielsweise können hierdurch mehrere Nutzer und Administratoren gleichzeitig an ein und demselben Arbeitsplatzrechner angemeldet sein, um nacheinander oder gemeinsam miteinander zu arbeiten.

Wie in Fig. 3 dargestellt, kann das Mobiltelefon 1 drahtlos, beispielsweise über WWAN-oder WLAN-Verbindung, Zertifikate bei einer Zertifizierungsbehörde beantragen und von dieser beantragte Zertifikate erhalten. Dazu nimmt das Mobiltelefon 1 über seine Funkeinrichtung 13, 15 (WLAN oder WWAN) direkten Kontakt mit der Datenverarbeitungsanlage der Zertifizierungsbehörde auf und überträgt dorthin die notwendigen Informationen. Ein unkomfortabler Umweg über das Zielsystem, wie im bekannten Stand der Technik, ist dabei nicht mehr vonnöten.

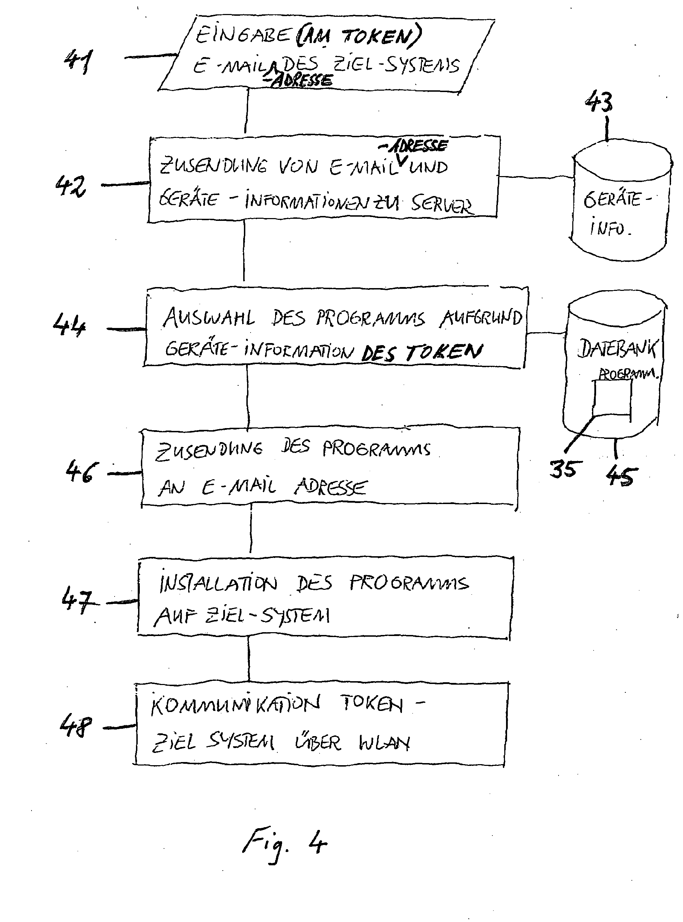

Wie aus Fig. 3 und Fig. 4 ersichtlich, kann die Übertragung und Installation der zur Kommunikation mit dem Mobiltelefon 1 notwendige Software bzw. des Programms 35 auf dem Zielsystem 17 auf einfache und zeitsparende Weise erfolgen. Hierzu sendet das Mobiltelefon 1 eine Nachricht (beispielsweise per Email) an eine dritte Datenverarbeitungsanlage bzw. (Programm-)Server 33, welche bzw. welcher wiederum dem Zielsystem 17 eine Nachricht (beispielsweise per Email) mit der notwendigen Software 35 (als Attachement) zukommen lässt. Sobald diese Software 35 auf dem Zielsystem 17 installiert ist, können Mobiltelefon 1 und Zielsystem direkt miteinander bezüglich einer Authentifizierung kommunizieren.

Hierzu gibt ein Nutzer die Email-Adresse des gewünschten Zielsystems 17 auf seinem Mobiltelefon 1 ein (Schritt 41), woraufhin diese Email-Adresse zusammen mit Geräteinformationen 43 des Mobiltelefons 1 an den Server 33 übersandt wird (Schritt 42). Der Server 33 wählt anhand der übersandten Geräteinformationen 43 aus einer Datenbank 45 (mit einer Vielzahl von Programmen) ein kompatibles bzw. auf die Eigenschaften des Mobiltelefons 1 abgestimmtes Programm 35 aus (Schritt 44) und sendet das Programm 35 als Attachement per Email an die Email-Adresse des Zielsystems 17 (Schritt 46).

Nach einer Installation des Programms 35 auf dem Zielsystem 17 (Schritt 47) ist eine Kommunikation zwischen Mobiltelefon 1 bzw. Token und Zielsystem 17 über WLAN ermöglicht (Schritt 48). Der Installationsvorgang kann hierbei aktiv von einem Nutzer oder Administrator durchgeführt werden. Selbstverständlich ist es aber auch denkbar, dass der Installationsvorgang als Grundfunktion am Zielsystem 17 freigegeben ist, so dass auch ohne vorheriges Eingreifen eines bereits authentifizierten Nutzers das Programm 35 installiert werden kann.

Obwohl das erfindungsgemäße Verfahren anhand eines Arbeitsplatzrechners 17 erläutert wurde, ist dessen Einsatzgebiet selbstverständlich nicht auf diese Anwendung begrenzt. So ist es auch denkbar, das erfindungsgemäße Verfahren allgemein in Fällen der Sicherheitstechnik, Gebäudetechnik, Fahrzeugtechnik, o.ä. anzuwenden, in denen eine Authentifizierung eines Nutzers an einem Zielsystem erforderlich ist. Insbesondere ist bereits die erfindungsgemäße "Fremdverwendung" eines Mobiltelefons abseits seiner bekannten Funktionen von entscheidendem Vorteil, da kein zusätzliches mobiles Endgerät zur Authentifizierung an einem Zielsystem mit sich geführt werden muss, sondern diese Funktion von einem meist bereits vorhandenen Mobiltelefon auf kostengünstige und komfortable Art und Weise zusätzlich übernommen wird.

## Patentansprüche

1. Verfahren zur Authentifizierung einer Person gegenüber einer elektronischen Datenverarbeitungsanlage (17) mittels eines elektronischen Schlüssels,
**dadurch gekennzeichnet, dass**
als elektronischer Schlüssel ein tragbares Endgerät (1) mit Display (3) und/oder standardisierter Kommunikations-Einrichtung, insbesondere eine WLAN-Einrichtung (13) eines Mobiltelefons, verwendet wird und zur Authentifizierung zwischen der Datenverarbeitungsanlage (17) und dem tragbaren Endgerät (1) eine drahtlose Kommunikation erfolgt.

2. Verfahren zur Authentifizierung nach Anspruch 1, **dadurch gekennzeichnet, dass** Daten zur Authentifizierung mittels Funk zwischen dem tragbaren Endgerät (1) und der Datenverarbeitungsanlage (17) und/oder mittels Anzeige auf einem Display (3) des tragbaren Endgerätes (1) und einer Kamera (25) der Datenverarbeitungsanlage (17) und/oder mittels Anzeige auf einem Display (23) der Datenverarbeitungsanlage (17) und einer Kamera (11) des tragbaren Endgerätes (1) übertragen werden.

3. Verfahren zur Authentifizierung nach Anspruch 2, **dadurch gekennzeichnet, dass** die Authentifizierung mittels bidirektionaler Kommunikation als "Challenge-Response-Authentifizierung" erfolgt.

4. Verfahren zur Authentifizierung nach einem der Ansprüche 1 bis 3, **dadurch gekennzeichnet, dass** auf dem tragbaren Endgerät (1) eine Anwendung läuft, welche es erlaubt, in einem Speicher (9) des tragbaren Endgeräts (1) wenigstens einen privaten Datenschlüssel und/oder wenigstens ein Zertifikat zu speichern, um im Falle einer Anforderung (Challenge) eine mit dem Datenschlüssel eindeutig in Verbindung stehende (codierte) Information an die Datenverarbeitungsanlage (17) zu übertragen.

5. Verfahren zur Authentifizierung nach Anspruch 4, **dadurch gekennzeichnet, dass** die Datenverarbeitungsanlage (17) die zurückgesendete, mit dem privaten Datenschlüssel eindeutig in Verbindung stehende Information verifiziert.

6. Verfahren zur Authentifizierung nach einem der Ansprüche 1 bis 5, **dadurch gekennzeichnet, dass** über eine Nachricht mit einer Zieladresse der Datenverarbeitungsanlage (17) an eine weitere Datenverarbeitungsanlage (33) ein Programm (35) von dieser weiteren Datenverarbeitungsanlage (33) an die der Datenverarbeitungsanlage (17) gesendet wird, welches mit seinem Programmmitteln eine Kommunikation mit dem tragbaren Endgerät (1) ermöglicht.

7. Verfahren zur Authentifizierung nach einem der Ansprüche 1 bis 6, **dadurch gekennzeichnet, dass** von dem tragbaren Endgerät (1) Zertifikate drahtlos von einer Zertifizierungsbehörde beantragt, von dort übertragen und in einem Speicher (9) des tragbaren Endgerätes (1) abgespeichert werden können.

8. Computerprogrammprodukt mit Programmmitteln zur Durchführung eines Verfahrens nach einem der Ansprüche 1 bis 8.

9. Datenträger mit einem Computerprogrammprodukt nach Anspruch 8.
